# EUROPEAN PATENT APPLICATION

(11) **EP 3 734 451 A1**
(43) Date of publication of application: **04.11.2020**
(21) Application number: 19764382.8
(22) Date of filing: 20.02.2019
(51) Int. Cl.: G06F 9/50

(54) **METHOD, SYSTEM, AND RELATED APPARATUS FOR SELECTING DATA NODE**

(30) Priority: 08.03.2018 CN 201810189516
(71) Applicant: HUAWEI TECHNOLOGIES CO., LTD., Shenzhen, Guangdong 518129, (CN)
(72) Inventor: DU, Lizhi, Shenzhen, Guangdong 518129 (CN); WU, Gang, Shenzhen, Guangdong 518129 (CN)
(74) Representative: Gill Jennings & Every LLP
(86) International application number: PCT/CN2019/075566
(87) International publication number: WO 2019/169998

(57) **Abstract**

Embodiments of this application provide a method for selecting a home data node for a customer, a system, and a related device. The method includes: obtaining customer information of a same- category customer of a customer in a plurality of data nodes of a database application system, and determining a home data node for the customer in the plurality of data nodes based on a contract device quantity upper limit of the customer, a same-category customer quantity in each of the plurality of data nodes, and remaining space of each of the plurality of data nodes, where the home data node is configured to store data all devices of the customer. The method for selecting a home data node improves persistence of data volume balance between the plurality of data nodes of the database application system. That is, with an increase in a quantity of different categories of customers and an increase in a device quantity of each customer, volumes of stored data of the plurality of data nodes of the database application system tend to be balanced, so that resource utilization can be improved, and data migration and maintenance costs can be reduced.

## Description

This application claims priority to Chinese Patent Application No. 201810189516.3, filed with the China National Intellectual Property Administration on March 8, 2018 and entitled "METHOD FOR SELECTING DATA NODE, SYSTEM, AND RELATED DEVICE", which is incorporated herein by reference in its entirety.

### TECHNICAL FIELD

The present invention relates to the database field, and in particular, to a method for selecting a data node, a system, and a related device.

### BACKGROUND

Features of an Internet of Things (Internet of Things, IoT) service such as high concurrency (High Concurrency) and always online (Always Online) pose a great challenge to a system architecture and a processing capability of a billing system. To enable a plurality of devices of a customer to concurrently use a data service (for example, all devices of a customer share, in real time, a data traffic package subscribed to by the customer), data of all the devices of the customer needs to be centrally stored in a data node (for example, a memory database device). This ensures low latency, transaction consistency, monitoring precision, and the like in concurrent processing. For ease of description, in this application, the data node used to store the data of all the devices of the customer is referred to as a home data node for the customer.

Due to limited space of each data node, a plurality of data nodes are required in an actual service system. When an account is registered for a customer, in the prior art, a data node with maximum remaining space in a database application system is used as a home data node for the customer. In an IoT service background in which device scales and growth rates of device quantities of different customers differ greatly, as a customer quantity and a device quantity increase, this method for selecting a home data node in the prior art easily causes imbalance of volumes of stored data of different data nodes, leading to a single point bottleneck, and further resulting in service interruption or a maintenance cost increase due to data migration.

### SUMMARY

A technical problem to be solved by the present invention is how to select a home data node for a customer in a plurality of data nodes of a database application system, so that volumes of stored data of the plurality of data nodes of the database application system can be balanced. In view of this, it is necessary to provide a method for selecting a data node for the customer, so that the volumes of the stored data of the plurality of data nodes of the database application system can be balanced in a customer service development process.

According to a first aspect, an embodiment of this application provides a method for selecting a data node, applied to a management device, where the management device manages a plurality of data nodes, and the method includes: receiving a data node allocation request, where the data node allocation request includes customer information, the customer information includes a contract device quantity upper limit of a customer, and the contract device quantity upper limit is a maximum device quantity agreed upon by the customer in advance; obtaining remaining space of each of the plurality of data nodes and customer information of all same-category customers in each of the plurality of data nodes, where each piece of same-category customer information and the customer information of the customer meet a same customer category criterion, and the customer category criterion includes at least a contract device quantity upper limit requirement; and determining a home data node for the customer in the plurality of data nodes based on the contract device quantity upper limit of the customer, the customer information of all the same-category customers in each of the plurality of data nodes, and the remaining space of each of the plurality of data nodes, where the home data node is configured to store data of all devices of the customer.

According to the method, the management device can determine the home data node for the customer in the plurality of data nodes of a database application system based on the contract device quantity upper limit of the customer and distribution of same-category customers in each data node. This can improve persistence of balance of volumes of stored data of the plurality of data nodes in the database application system. That is, with an increase in a quantity of different categories of customers and with development of customer services, the volumes of the stored data of the plurality of data nodes still tend to be balanced.

In a possible solution, the determining, by the management device, a home data node for the customer in the plurality of data nodes based on the contract device quantity upper limit of the customer, the customer information of all the same-category customers in each of the plurality of data nodes, and the remaining space of each of the plurality of data nodes includes: selecting, from the plurality of data nodes, data nodes whose remaining space can accommodate the data of all the devices of the customer when a device quantity reaches the contract device quantity upper limit or an operating device quantity upper limit, and in which a distributed same-category customer quantity is less than a same-category customer quantity threshold, to obtain a first candidate data node set; and determining the home data node for the customer in the first candidate data node set, where the management device determines the operating device quantity upper limit based on the contract device quantity upper limit of the customer, and the management device determines the same-category customer quantity threshold based on the customer information of all the same-category customers in each of the plurality of data nodes.

According to this solution, the data management node can further predict the operating device quantity upper limit of the customer, and use the operating device quantity upper limit as a criterion for determining whether remaining space of the home data node is sufficient, so that an operator can further improve resource utilization of the operator, for example, implement "oversubscription".

In a possible solution, the determining, by the management device, the home data node for the customer in the first candidate data node set includes: determining, in the first candidate data node set, a data node with minimum remaining space, a data node with lightest load, or a data node with a minimum same-category customer quantity as the home data node for the customer.

In a possible design, the determining, by the management device, the same-category customer quantity threshold based on the customer information of all the same-category customers in each of the plurality of data nodes includes: calculating a total quantity of all same-category customers included in the plurality of data nodes; and determining the same-category customer quantity threshold based on the total quantity of same-category customers and a quantity of the plurality of data nodes.

In a possible solution, the determining, by the management device, the same-category customer quantity threshold based on the total quantity of same-category customers and a quantity of the plurality of data nodes includes: dividing the total quantity of same-category customers by the quantity of the plurality of data nodes, to obtain an average quantity of same-category customers; and determining the same-category customer quantity threshold based on the average quantity of same-category customers.

In a possible solution, the determining, by the management device, the same-category customer quantity threshold based on the average quantity of same-category customers includes: rounding the average quantity of same-category customers to obtain the same-category customer quantity threshold, or multiplying a preset coefficient by the average quantity of same-category customers to obtain the same-category customer quantity threshold.

In a possible solution, the determining, by the management device, the operating device quantity upper limit of the customer based on the contract device quantity upper limit of the customer includes: obtaining historical records of actual device quantities of all same-category customers in each of the plurality of data nodes; and predicting the operating device quantity upper limit of the customer based on the contract device quantity upper limit of the customer and the historical records of the actual device quantities of the same-category customers.

In a possible solution, the predicting, by the management device, the operating device quantity upper limit of the customer based on the contract device quantity upper limit of the customer and the historical records of the actual device quantities of the same-category customers includes: obtaining a change trend of the actual device quantities of the same-category customers based on the historical records of the actual device quantities of the same-category customers; and predicting the operating device quantity upper limit of the customer based on the contract device quantity upper limit of the customer and the change trend.

In a possible solution, the predicting, by the management device, the operating device quantity upper limit of the customer based on the contract device quantity upper limit of the customer and the change trend includes: predicting a stable device quantity of the same-category customer based on the change trend, where the stable device quantity is a device quantity that is of the same-category customer and whose variations between different time units in a preset time period are less than a preset value; and predicting the operating device quantity upper limit of the customer based on the contract device quantity upper limit of the customer and the stable device quantity.

In a possible solution, the predicting, by the management device, the operating device quantity upper limit of the customer based on the contract device quantity upper limit of the customer and the stable device quantity includes: dividing the stable device quantity by the contract device quantity upper limit of the same-category customer to obtain a first convergence coefficient; and multiplying the first convergence coefficient by the contract device quantity upper limit of the customer to obtain the operating device quantity upper limit of the customer.

In a possible solution, the predicting, by the management device, the operating device quantity upper limit of the customer based on the contract device quantity upper limit of the customer and the stable device quantity includes: dividing the stable device quantity by the contract device quantity upper limit of the same-category customer to obtain a first convergence coefficient; and multiplying the first convergence coefficient by the contract device quantity upper limit of the customer to obtain a product, and adding the product with a preset margin value, to obtain the operating device quantity upper limit of the customer.

In a possible solution, the determining, by the management device, the operating device quantity upper limit of the customer based on the contract device quantity upper limit of the customer includes: obtaining a preset same-category customer device quantity upper limit; and determining the operating device quantity upper limit of the customer based on the contract device quantity upper limit of the customer and the preset same-category customer device quantity upper limit.

In a possible solution, the determining, by the management device, the operating device quantity upper limit of the customer based on the contract device quantity upper limit of the customer and the preset same-category customer device quantity upper limit includes: dividing the preset same-category customer device quantity upper limit by the contract device quantity upper limit of the same-category customer to obtain a second convergence coefficient; and multiplying the second convergence coefficient by the contract device quantity upper limit of the customer to obtain the operating device quantity upper limit of the customer.

In a possible solution, the determining, by the management device, the operating device quantity upper limit of the customer based on the contract device quantity upper limit of the customer includes: obtaining a third convergence coefficient preset for a customer category to which the customer belongs; and determining the operating device quantity upper limit based on the third convergence coefficient and the contract device quantity upper limit of the customer.

In a possible solution, the determining, by the management device, the operating device quantity upper limit based on the third convergence coefficient and the contract device quantity upper limit of the customer includes: multiplying the third convergence coefficient by the contract device quantity upper limit of the customer to obtain the operating device quantity upper limit of the customer.

In a possible solution, the customer information further includes industry information of the customer, and the customer category criterion further includes an industry requirement.

In a possible solution, the customer information further includes region information of the customer, and the customer category criterion further includes a region requirement.

According to a second aspect, an embodiment of this application provides a management device, including a processor and a memory, where the memory is configured to store a program instruction; and the processor is configured to invoke and execute the program instruction stored in the memory, to enable the management device to perform the method for selecting a data node according to the first aspect.

According to a third aspect, an embodiment of this application provides a computer-readable storage medium, including an instruction. When the instruction is run on a computer, the computer is enabled to perform the method for selecting a data node according to the first aspect.

### BRIEF DESCRIPTION OF DRAWINGS

FIG. 1 is a schematic architectural diagram of a database application system according to an embodiment of this application;
FIG. 2 is a flowchart of a method for selecting a data node by a management device according to an embodiment of this application;
FIG. 3 is a schematic architectural diagram of a CRM system and an OCS system according to an embodiment of this application;
FIG. 4A is a flowchart of a method for registering an Internet of Things customer with an OCS by a CRM according to an embodiment of this application;
FIG. 4B is a flowchart of a method for determining a home data node by a service management node according to an embodiment of this application;
FIG. 5 is a structural diagram of hardware of a management device according to an embodiment of this application; and
FIG. 6 is a schematic structural diagram of a management device according to an embodiment of this application.

### DESCRIPTION OF EMBODIMENTS

The following describes the technical solutions in the embodiments of this application with reference to the accompanying drawings in the embodiments of this application.

### Embodiment 1

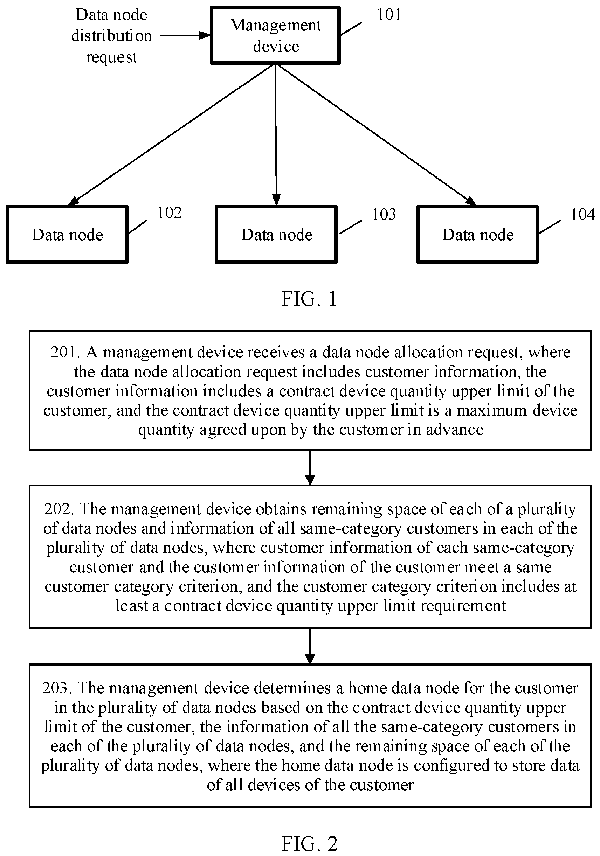

FIG. 1 is a schematic architectural diagram of a database application system according to an embodiment of this application. The database application system includes a management device 101, a data node 102, a data node 103, and a data node 104, whose functions are described as follows:
The management device 101 is a management device of a plurality of data nodes in the database application system, and is configured to: receive a data node allocation request (for example, receive a request from a customer management system); and based on customer information in the data node allocation request, select a home data node for the customer from the plurality of data nodes (for example, the data nodes 102 to 104) in the database application system on a premise of ensuring that data volumes of the plurality of data nodes are balanced, where the home data node is configured to store data of all devices of the customer. For an IoT customer, there may be millions of IoT devices, and service data of each IoT device needs to be stored in the home data node, to meet a performance requirement. The management device may be a business management point device (Business Management Point, BMP) in a billing system.

The data node 102 is a database device that is in the database application system and whose storage capacity has an upper limit. The data node 102 may be a memory database (that is, a database in which data is stored and directly operated in a memory and that has a relatively high data access speed), or may be a disk resident database (that is, a database in which data is stored and operated in a disk and that has a relatively low data access speed), and is configured to store customer information of the customer and the data of all the devices (for example, data of IoT devices) of the customer. As a customer quantity increases and customer services expand, remaining storage space of data nodes is continuously reduced. When a home data node is selected for a customer, an operating device quantity upper limit of the customer and distribution of same-category customers in a plurality of data nodes need to be considered. For a specific selection method, refer to subsequent embodiments of this application. The service node 102 may be a CBPMDB (Convergent Billing Point Memory Database, CBPMDB) in the billing system, or may be a relational database.

The data node 103 is similar to the data node 102.

The data node 104 is similar to the data node 102.

It should be noted that FIG. 1 includes only three data nodes. In actual deployment, there may be more data nodes.

The following further describes, by using embodiments, a solution of selecting a data node based on the architecture of the database application system shown in FIG. 1.

### Embodiment 2

FIG. 2 is a flowchart of a method for selecting a data node by a management device according to an embodiment of this application. The method includes the following steps.

Step 201: The management device receives a data node allocation request, where the data node allocation request includes customer information, the customer information includes a contract device quantity upper limit of a customer, and the contract device quantity upper limit is a maximum device quantity agreed upon by the customer in advance.

Specifically, the management device may receive the data node allocation request from a CRM system.

Specifically, the contract device quantity upper limit may be extracted from an account registration contract of the customer. Generally, a maximum quantity of devices that can be provisioned or used by the customer is agreed upon in the account registration contract. Based on service operation of the customer, a device quantity of the customer may exceed the maximum quantity or be far less than the maximum quantity.

Optionally, the customer information may further include industry information and region information, to determine same-category customers. For details, refer to subsequent steps.

Step 202: The management device obtains remaining space of each of a plurality of data nodes and customer information of all same-category customers in each of the plurality of data nodes, where customer information of each same-category customer and the customer information of the customer meet a same customer category criterion, and the customer category criterion includes at least a contract device quantity upper limit requirement.

For example, a criterion for a customer category may be "a customer with a contract device quantity upper limit of 1 million to 1.5 million". The contract device quantity upper limit requirement may be a specific quantity, or may be a quantity range.

Optionally, the customer category criterion may further include an industry requirement. For example, a customer category criterion may be defined as "a customer with a device quantity of 1 million in a bicycle sharing industry". The industry requirement may be a specific industry name or an industry scope. The industry scope may be expressed in a manner similar to literal expressions. For example, a "meter reading industry" may be used to represent an industry scope, covering a "gas meter reading industry" and an "electric power meter reading industry".

Optionally, the customer category criterion may further include a region requirement. For example, a customer category criterion may be defined as "a customer with a device quantity of 5 million in Shanghai". The region requirement can be a name of a specific administrative region such as a province or city, or a region name such as "East China", "North China", "West Coast", or "East Coast".

The customer category criterion may include the contract device quantity upper limit requirement, the industry requirement, and the region requirement. For example, a customer category criterion may be "a customer with a device quantity of 20 million in the bicycle sharing industry in East China".

The customer category criterion may further have more requirements, and may further include, based on a service requirement, other information requirements that help identify that two customers are same-category customers. Details are not described herein.

Optionally, to improve selection efficiency, the management device may periodically collect statistics on information such as space usage of the plurality of data nodes and a quantity of customer devices included in the plurality of data nodes, and cache the statistical result, so as to use the statistical result when determining the home data node subsequently.

Step 203: The management device determines a home data node for the customer in the plurality of data nodes based on the contract device quantity upper limit of the customer, the customer information of all the same-category customers in each of the plurality of data nodes, and the remaining space of each of the plurality of data nodes, where the home data node is configured to store data of all devices of the customer.

Specifically, the management device may first select, from the plurality of data nodes, data nodes whose remaining space can accommodate the data of all the devices of the customer when a device quantity reaches the contract device quantity upper limit or an operating device quantity upper limit, and in which a distributed same-category customer quantity is less than a same-category customer quantity threshold, to obtain a first candidate data node set; and then determine the home data node for the customer in the first candidate data node set. The management device determines the operating device quantity upper limit based on the contract device quantity upper limit of the customer, and the management device determines the same-category customer quantity threshold based on the customer information of all the same-category customers in each of the plurality of data nodes.

Specifically, that the management device determines the home data node for the customer in the first candidate data node set may be: determining, in the first candidate data node set, a data node with minimum remaining space, a data node with lightest load, or a data node with a minimum same-category customer quantity as the home data node for the customer.

Optionally, the management device may determine, based on a parameter preset by an operator, whether to select the data node with minimum remaining space, the data node with a minimum same-category customer quantity, or the data node with lightest load from the first candidate data node set.

Specifically, that the management device determines the same-category customer quantity threshold based on the customer information of all the same-category customers in each of the plurality of data nodes may be: first calculating a total quantity of all same-category customers included in the plurality of data nodes; and then determining the same-category customer quantity threshold based on the total quantity of same-category customers and a quantity of the plurality of data nodes.

Specifically, that the management device determines the same-category customer quantity threshold based on the total quantity of same-category customers and a quantity of the plurality of data nodes may be: first dividing the total quantity of same-category customers by the quantity of the plurality of data nodes, to obtain an average quantity of same-category customers; and then determining the same-category customer quantity threshold based on the average quantity of same-category customers.

Specifically, that the management device determines the same-category customer quantity threshold based on the average quantity of same-category customers may be: rounding the average quantity of same-category customers to obtain the same-category customer quantity threshold, or multiplying a preset coefficient by the average quantity of same-category customers to obtain the same-category customer quantity threshold.

Specifically, that the management device determines the operating device quantity upper limit of the customer based on the contract device quantity upper limit of the customer may be: first obtaining historical records of actual device quantities of all same-category customers in each of the plurality of data nodes; and then predicting the operating device quantity upper limit of the customer based on the contract device quantity upper limit of the customer and the historical records of the actual device quantities of the same-category customers.

Specifically, that the management device predicts the operating device quantity upper limit of the customer based on the contract device quantity upper limit of the customer and the historical records of the actual device quantities of the same-category customers may be: first obtaining a change trend of the actual device quantities of the same-category customers based on the historical records of the actual device quantities of the same-category customers; and then predicting the operating device quantity upper limit of the customer based on the contract device quantity upper limit of the customer and the change trend.

Specifically, that the management device predicts the operating device quantity upper limit of the customer based on the contract device quantity upper limit of the customer and the change trend may be: first predicting a stable device quantity of the same-category customer based on the change trend, where the stable device quantity is a device quantity that is of the same-category customer and whose variations between different time units in a preset time period are less than a preset value; and then predicting the operating device quantity upper limit of the customer based on the contract device quantity upper limit of the customer and the stable device quantity.

In a possible solution, the predicting, by the management device, the operating device quantity upper limit of the customer based on the contract device quantity upper limit of the customer and the stable device quantity includes: dividing the stable device quantity by the contract device quantity upper limit of the same-category customer to obtain a first convergence coefficient; and then multiplying the first convergence coefficient by the contract device quantity upper limit of the customer to obtain the operating device quantity upper limit of the customer.

Specifically, that the management device determines the operating device quantity upper limit of the customer based on the contract device quantity upper limit of the customer may alternatively be: first obtaining a preset same-category customer device quantity upper limit; and then determining the operating device quantity upper limit of the customer based on the contract device quantity upper limit of the customer and the preset same-category customer device quantity upper limit.

Specifically, that the management device determines the operating device quantity upper limit of the customer based on the contract device quantity upper limit of the customer and the preset same-category customer device quantity upper limit may be: first dividing the preset same-category customer device quantity upper limit by the contract device quantity upper limit of the same-category customer to obtain a second convergence coefficient; and then multiplying the second convergence coefficient by the contract device quantity upper limit of the customer to obtain the operating device quantity upper limit of the customer.

Specifically, that the management device determines the operating device quantity upper limit of the customer based on the contract device quantity upper limit of the customer may alternatively be: first obtaining a third convergence coefficient preset for a customer category to which the customer belongs; and then determining the operating device quantity upper limit based on the third convergence coefficient and the contract device quantity upper limit of the customer.

Specifically, that the management device determines the operating device quantity upper limit based on the third convergence coefficient and the contract device quantity upper limit of the customer may be: multiplying the third convergence coefficient by the contract device quantity upper limit of the customer to obtain the operating device quantity upper limit of the customer.

According to Embodiment 2, the management device can determine the home data node for the customer in the plurality of data nodes of the database application system based on the contract device quantity upper limit of the customer and distribution of same-category customers in each data node. This can improve persistence of balance of volumes of stored data of the plurality of data nodes in the database application system. That is, with an increase in a quantity of different categories of customers and with development of customer services, the volumes of stored data of the plurality of data nodes still tend to be balanced.

The following further describes the foregoing technical solution by using an example in which a customer relationship management (Customer Relationship Management, CRM) system registers an IoT customer with an online charging system (Online Charging System, OCS) (where a home data node needs to be selected for the IoT customer).

### Embodiment 3

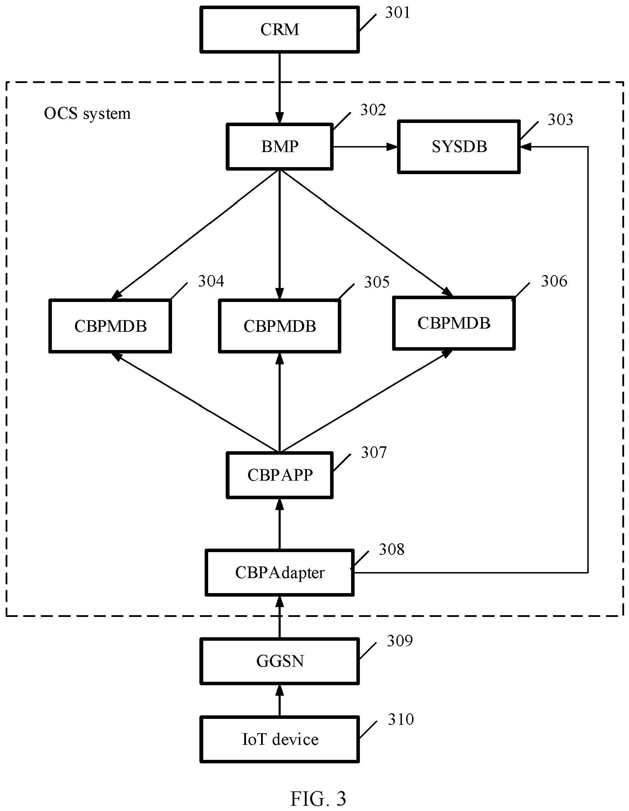

FIG. 3 is a schematic architectural diagram of a CRM system and an OCS system according to an embodiment of this application. The system includes a customer relationship management (Customer Relationship Management, CRM) system 301, a business management point (Business Management Point, BMP) 302, and a system database (System Database, SYSDB) 303, a convergent billing point memory database (Convergent Billing Point Memory Database, CBPMDB) 304, a CBPMDB 305, a CBPMDB 306, a convergent billing point application (Convergent Billing Point Application, CBPAPP) 307, a convergent billing point adapter (Convergent Billing Point Adapter, CBPAdapter) 308, a gateway GPRS support node (Gateway GPRS Support Node, GGSN) 309, and an IoT device 310, whose functions are described as follows:
The CRM 301 is configured to register an IoT customer with the OCS and maintain customer material.

The BMP 302 is configured to: receive an IoT customer registration request sent by the CRM 301, and allocate a home data node (CBPMDB) to the IoT customer on a premise of ensuring balance of data volumes of data nodes. In FIG. 3, there is only one BMP. In actual deployment, there may be a plurality of BMPs, and the plurality of BMPs may be connected to one load balancer. Registration requests of the CRM may be distributed to each BMP through a load balancer for processing.

The SYSDB 303 is configured to store routing information of a customer (that is, information used to determine a data node in which data of a customer device is stored), and statistical information in each data node (CBPMDB), for example, a quantity of IoT customers, a device data volume of the IoT customers, and remaining data space in each data node.

The CBPMDB 304 may be a relational database (for example, an Oracle database), and is configured to store data of all devices of an IoT customer, for example, data traffic data of each device.

To enable that a plurality of devices of a customer can concurrently use a data service, and all devices of the customer can share, in real time, a service data traffic package or a data traffic pool subscribed to by the customer, all data of the customer and the devices needs to be centrally stored in a data node (CBPMDB), to meet requirements for low latency, transaction consistency, and monitoring precision in high concurrent processing. For ease of description, the data node is also referred to as a home data node for the customer.

For a single data node, mainstream relational databases in the industry all have a single-node capacity upper limit (a common single-node upper limit is 20 million devices). To ensure that data of millions of devices of an IoT customer is stored in one data node, and ensure that volumes of data stored in different data nodes in a system are balanced, a home data node needs to be properly selected for the customer when an account is registered for the IoT customer. For a specific selection method, refer to subsequent embodiments of this application.

The CBPMDB 305 is similar to the CBPMDB 304.

The CBPMDB 306 is similar to the CBPMDB 304.

The CBPAPP 307 is configured to access (read, write, rewrite, and the like), based on a service request (such as a billing request) sent by the IoT device 310, data of the IoT device 310 in a home data node (CBPMDB) of a customer that corresponds to the IoT device 310. In FIG. 3, there is only one CBPAPP. In actual deployment, there may be a plurality of CBPAPPs, and the CBPAPPs are all connected to the CBPAdapter.

The CBPAdapter 308 is configured to route a service request (for example, a billing request) of an IoT device to one of the CBPAPPs. The CBPAdapter 308 can read routing information of the customer from the SYSDB 303, to determine a specific CBPAPP to which the service request is routed.

The GGSN 309 is configured to route and encapsulate a data packet between a general packet radio service (General Packet Radio Service, GPRS)/universal mobile telecommunications system (Universal Mobile Telecommunications System, UMTS) network and an external data network. For example, the GGSN 309 may be configured to report data traffic requests used by the IoT device 310 to the CBPAdapter 308, and the CBPAdapter 308 distributes the requests to the CBPAPP through routing for billing control.

The IoT device 310 is a device of an IoT customer, and may be a mobile phone terminal or an Internet of Things terminal. FIG. 3 shows only one IoT device. In actual deployment, there may be more IoT devices.

The following further describes, by using an embodiment, a solution of selecting a home data node based on the architecture of the CRM system and the OCS system shown in FIG. 3.

### Embodiment 4

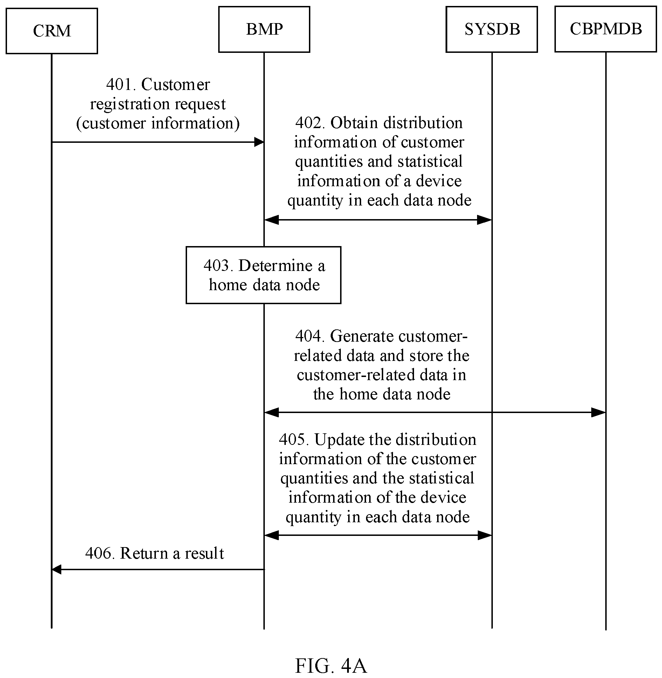

FIG. 4A is a flowchart of a method for registering an Internet of Things customer with an OCS by a CRM according to an embodiment of this application. The method includes the following steps.

Step 401: The CRM system sends a customer registration request to a BMP

Specifically, when registering a new IoT customer, the CRM system sends a customer registration request to the BMP in the OCS system. The registration request includes customer information of the IoT customer, and the customer information includes a contract device quantity upper limit, industry information, region information, and the like of the IoT customer.

For example, when an enterprise customer applies for IoT service registration, a salesman of the CRM system collects information such as a contract device quantity upper limit, an industry category, and an enterprise location of the enterprise customer, and enters the information into the CRM system. The CRM system constructs the registration request and sends the registration request to the BMP. The registration request carries the information such as the contract device quantity upper limit, the industry category, and the enterprise location. The contract device quantity upper limit influences a bargain discount for the customer. After a device quantity of the enterprise customer reaches the contract device quantity upper limit, if the enterprise customer still needs to increase the device quantity, the enterprise customer needs to sign a new contract and perform registration again.

Step 402: The BMP obtains, from an SYSDB, distribution information of same-category customer quantities and statistical information of a device quantity in each data node.

Specifically, the BMP may query, based on the customer information of the IOT customer, the SYSDB for distribution of same-category customers in different data nodes and statistical information of the device quantity in each data node (CBPMDB), to subsequently select a home data node for the customer. In this case, the BMP may maintain, in the SYSDB, data tables shown in Table 1 and Table 2.

Before maintaining Table 1, the BMP may set different customer category criteria based on different customer information, to classify customers into different categories. For ease of description, in this embodiment of this application, customers that meet a same customer category criterion are referred to as same-category customers. The customer category criterion can include a contract device quantity upper limit requirement. For example, the BMP may define a contract device quantity upper limit ranging from 0.96 million to 1.05 million as a customer category 1, define a contract device quantity upper limit ranging from 1.06 million to 1.15 million as a customer category 2, and so on. In this case, a customer with a contract device quantity upper limit of 1 million and a customer with a contract device quantity upper limit of 1.15 million are same-category customers. Because device quantity scales and growth rates of device quantities of enterprise customers in different industries and regions may vary, the BMP may further include the industry information and the region information in the customer category criterion, to classify customer categories in a more refined manner and more precisely select a home data node for an IoT customer. In this case, industries of same-category customers further need to be the same or similar (for example, both a water meter reading industry and an electric power meter reading industry belong to an intelligent meter reading industry and may be considered as a same industry or similar industries), or regions need to be the same or similar (for example, a same city or a same region). Optionally, the BMP may preset, in the SYSDB, a table shown in Table 3 as the customer category criterion, to distinguish between customer categories. Optionally, the BMP may use more customer attributes as a category classification criterion. Details are not described in this embodiment of this application.

Optionally, the BMP may periodically (for example, at an interval of 60 minutes, and a specific period is not limited in this embodiment of this application) collect statistics on a customer quantity, an actual device quantity, and remaining space in each data node, and update a statistical result to data tables shown in Table 1 and Table 2 in the SYSDB.

**Table 1 Distribution of customer quantities**

| Home data node | Customer category 1 | Customer category 2 | ... | Customer category N |
|---|---|---|---|---|
| Data node 1 | Specific quantity | Specific quantity | ... | Specific quantity |
| Data node 2 | Specific quantity | Specific quantity | ... | Specific quantity |
| ... | ... | ... | ... | ... |
| Data node N | Specific quantity | Specific quantity | ... | Specific quantity |

**Table 2 Distribution of device quantities**

| | | |
|---|---|---|
| Home DB node | Total quantity of current devices | Remaining space |
| Data node 1 | Specific device quantity | Specific remaining space |
| Data node 2 | Specific device quantity | Specific remaining space |
| ... | ... | ... |
| Home DB node | Total quantity of current devices | Remaining space |
| Data node N | Specific device quantity | Specific remaining space |

**Table 3 Customer category criterion**

| Customer category | Contract device quantity upper limit requirement | Industry requirement | Region requirement | Explanation |
|---|---|---|---|---|
| Category 1 | 0.96 million to 1.05 million | Electric power meter reading | Nanjing | Customers whose contract device quantity upper limits range from 0.96 million to 1.05 million, who belong to the industry of electricity meter reading, and who are located in Nanjing are category 1 customers. |
| Category 2 | 1.06 million to 1.15 million | Bicycle sharing | North China | Customers whose contract device quantity upper limits range from 1.06 million to 1.15 million, who belong to the industry of bicycle sharing, and who are located in |
| | | | | North China are category 2 customers. |
| Category 3 | 1.06 million to 1.15 million | Bicycle sharing | East China | Customers whose contract device quantity upper limits range from 1.06 million to 1.15 million, who belong to the industry of bicycle sharing, and who are located in East China are category 3 customers. |
| Category 4 | 5 million | Gas meter reading | Shanghai | Customers whose contract device quantity upper limits are 5 million, who belong to the industry of gas meter reading, and who are located in Shanghai are category 4 customers. |
| ... | ... | ... | ... | ... |
| Category N | Specific scope | Specific industry | Specific region | ... |

Step 403: The BMP determines a home data node for the customer.

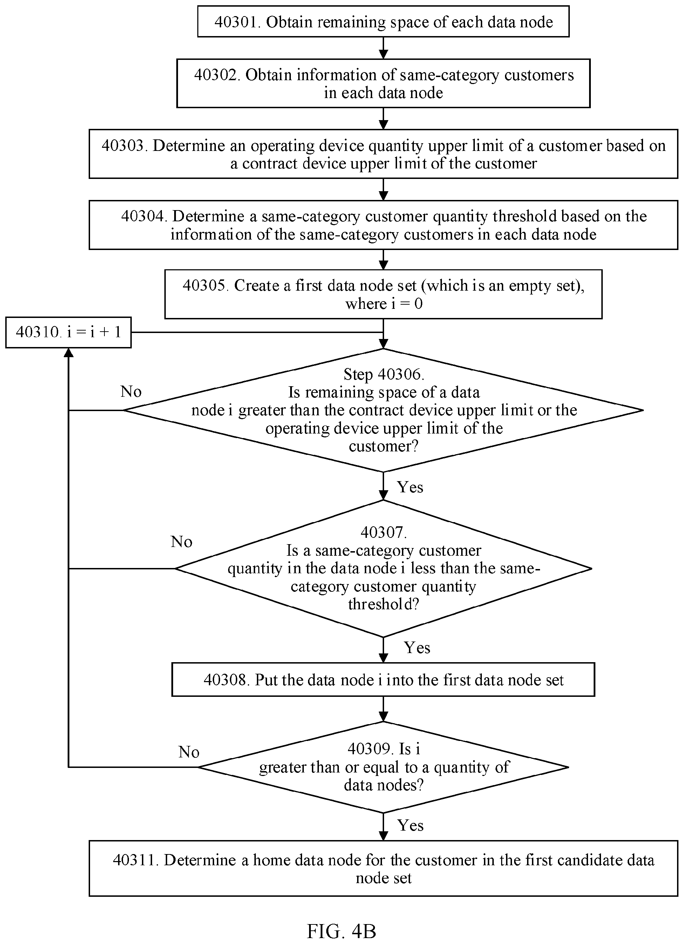

Specifically, the BMP may find, through query based on step 402, distribution of same-category customers of the IoT customer in different data nodes and remaining space of each data node, and determine the home data node for the IoT customer in the data nodes. For details, refer to FIG. 4B.

FIG. 4B is a flowchart of a method for determining the home data node by the BMP according to an embodiment of this application. The method includes the following steps.

Step 40301: The BMP obtains remaining space of each data node.

Assuming that there are five CBPMDB data nodes in the OCS system, the BMP obtains, from the SYSDB through query, results shown in Table 4.

**Table 4 Remaining space**

| Home data node | Remaining space |
|---|---|
| CBPMDB 1 | Data volume of 4.1 million devices |
| CBPMDB 2 | Data volume of 2 million devices |
| CBPMDB 3 | Data volume of 3 million devices |
| CBPMDB 4 | Data volume of 3.5 million devices |
| CBPMDB 5 | Data volume of 0.95 million devices |

Step 40302: The BMP obtains customer information of same-category customers in each data node.

Still in the foregoing example, assuming that the IoT customer is a bicycle sharing customer in East China that has a contract device quantity upper limit of 1.1 million, the BMP may determine that the IoT customer is a category 3 customer, and the BMP obtains, through query from the SYSDB, that distribution of the category 3 customer in each data node, as shown in Table 5. In addition, the BMP can further obtain a current device quantity of each same-category customer and historical records of device quantities (for example, historical records of device quantities recorded by month).

**Table 5 Distribution of same-category customer quantities**

| Home data node | Quantity of category 3 customers |
|---|---|
| CBPMDB 1 | 3 |
| CBPMDB 2 | 2 |
| CBPMDB 3 | 1 |
| CBPMDB 4 | 1 |
| CBPMDB 5 | 3 |

Step 40303: The BMP determines an operating device quantity upper limit of the customer based on the contract device quantity upper limit of the customer.

The operating device quantity upper limit is an actual maximum device quantity of the IoT customer in an operation process, and a value of the operating device quantity upper limit may be greater than or less than the contract device quantity upper limit. The BMP may predict the operating device quantity upper limit of the IoT customer. The BMP may obtain historical records of device quantities of all same-category customers in all data nodes, determine a change trend of the device quantities of the same-category customers based on the historical records, predict a stable device quantity of the same-category customer based on the change trend, and then predict the operating device quantity upper limit of the IoT customer based on the contract device quantity upper limit of the IoT customer and the stable device quantity. The stable device quantity herein is a device quantity that is of the same-category customer and whose variations of device quantities between different time units (for example, a month) in a preset time period (for example, in last year or in half of the last year) is less than a preset value (for example, 10 thousand or 50 thousand). For example, the BMP may determine a change trend of devices quantities of the same-category customers of the IoT customer, as shown in Table 6. It can be learned that the device quantities of same-category customers (which may be a device quantity of a single same-category customer, or may be an average device quantity of a plurality of same-category customers, that is, a sum of device quantities of all same-category customers divided by a same-category customer quantity) finally basically remains 0.7 million (in the last year, the device quantity varies around 0.7 million, and variations between different months are less than 20 thousand) in each month from 10 thousand initially. Therefore, it may be determined that a stable device quantity of the same-category customer of the IoT customer is 0.7 million. In this way, the BMP may divide the stable device quantity by the contract device quantity upper limit of the same-category customer (which may be a contract device quantity upper limit of a single same-category customer, or an average of contract device quantity upper limits of a plurality of same-category customers, that is, a sum of contract device quantity upper limits of all same-category customers divided by a same-category customer quantity), to obtain a convergence coefficient Ka (corresponding to a first convergence coefficient), and then multiply Ka by the contract device quantity upper limit of the IoT customer to obtain the operating device quantity upper limit of the IoT customer. If a margin value (optional) is considered, a preset quantity may be added to the obtained operating device quantity upper limit. For example, assuming that a contract device quantity upper limit of a same-category customer of the IoT customer is 1.15 million, and a stable device quantity of the same-category customer is 0.7 million, the BMP may calculate Ka = 70/115 = 0.608, and the operating device quantity upper limit of the IoT customer = Ka x 110 + Margin value = 0.67 million + Margin value = 0.7 million.

**Table 6 Trend of an actual device quantity of a same-category customer**

| | ... | January | February | March | April | May | June | July | August | September |
|---|---|---|---|---|---|---|---|---|---|---|
| Actual device quantity | 10 thousand | 0.69 million | 0.7 million | 0.71 million | 0.69 million | 0.69 million | 0.69 million | 0.71 million | 0.69 million | 0.69 million |

The BMP may alternatively obtain a preset same-category customer device quantity upper limit (which may be an upper limit of a sum of device quantities of all same-category customers or an upper limit of an average of device quantities of all same-category customers) preset by an operator, and determine the operating device quantity upper limit of the IoT customer based on the preset same-category customer device quantity upper limit, the contract device quantity upper limit of the same-category customer (which may correspondingly be a sum of contract device quantity upper limits of all the same-category customers, or may be an average of contract device quantity upper limits of all the same-category customers), and the contract device quantity upper limit of the IoT customer. For example, the BMP may obtain a convergence coefficient Kb (corresponding to a second convergence coefficient) by dividing the preset same-category customer device quantity upper limit by the contract device quantity upper limit of the same-category customer, and then obtain the operating device quantity upper limit of the IoT customer by multiplying Ka by the contract device quantity upper limit of the IoT customer. For example, It is assumed that an upper limit of a sum of device quantities of all existing same-category customers (same-category customers in a range of all data nodes) of the IoT customer preset by the operator is 4 million, and there are five existing same-category customers whose contract device quantity upper limits are 1.1 million, 1.15 million, 1.15 million, 1.1 million, and 1.1 million respectively. In this case, Ka = 4 million/(1.1 million + 1.15 million + 1.15 million + 1.1 million + 1.1 million) = 4 million/5.6 million = 0.71. Therefore, it may be determined that the operating device quantity upper limit of the IoT customer is 1.1 million x 0.71 = 0.71 million. For another example, it is assumed that an upper limit of an average of device quantities of all existing same-category customers of the IoT customer preset by the operator is 0.79 million. In this case, Ka = 0.79 million/((1.1 million + 1.15 million + 1.15 million + 1.1 million + 1.1 million)/5) = 0.71. Therefore, it may be determined that the operating device quantity upper limit of the IoT customer is 1.1 million x 0.71 = 0.71 million.

The BMP may further obtain a convergence coefficient Kc (corresponding to a third convergence coefficient) preset by the operator for a customer category to which the IoT customer belongs, and determine the operating device quantity upper limit of the IoT customer based on Kc and the contract device quantity upper limit of the IoT customer. For example, the BMP obtains the operating device quantity upper limit of the IoT customer by multiplying preset Kc by the contract device quantity upper limit of the IoT customer.

Step 40304: The BMP determines a same-category customer quantity threshold based on the customer information of the same-category customers in each data node.

Specifically, the BMP may calculate a total quantity of all same-category customers (not including the IoT customer because the home data node for the IoT customer is not determined, and customer information of the IoT customer is not entered into a database) included in the plurality of data nodes, and then determine the same-category customer quantity threshold based on the total quantity of same-category customers and a quantity of the plurality of data nodes. Specifically, the BMP may divide the total quantity of same-category customers by the quantity of the plurality of data nodes, to obtain an average quantity of same-category customers; and then determine the same-category customer quantity threshold based on the average quantity of same-category customers. Specifically, the BMP may round the average quantity of same-category customers to obtain the same-category customer quantity threshold, or multiply a preset coefficient by the average quantity of same-category customers to obtain the same-category customer quantity threshold. Still in the foregoing example, the BMP may divide a total quantity of customers in all nodes by the quantity of data nodes to obtain the average quantity of same-category customers = (3 + 2 + 1 + 1 + 3)/5 = 2, and obtain the same-category customer quantity threshold, namely, 2, after rounding.

Step 40305: The BMP creates a first data node set (which is an empty set), and sets a subscript i to 0.

The BMP creates the first data node set (an empty set), and sets the subscript I to 0 to prepare to traverse all data nodes (to obtain the first data node set). According to the foregoing example, there are five data nodes which are respectively a 0^{th} data node, a 1^{st} data node, ..., and a 4^{th} data node, and i changes from 0 to 4. The first data node set may be in a data structure such as an array or a list.

Step 40306: The BMP determines whether remaining space of a data node i is greater than the contract device quantity upper limit of the IoT customer or the operating device quantity upper limit of the IoT customer.

Specifically, the BMP determines whether the remaining space of the data node i (an i^{th} data node) is greater than the contract device quantity upper limit of the IoT customer or the operating device quantity upper limit of the IoT customer. If yes, the BMP continues to perform step 40307; otherwise, the BMP performs step 40310 to continue to traverse a next data node.

It should be noted that the BMP may use the contract device quantity upper limit of the IoT customer, or may use the operating device quantity upper limit of the IoT customer as a criterion for determining whether remaining space of a data node is sufficient. A difference lies in that the former one (using the contract device quantity upper limit) can ensure that there is sufficient storage space for the IoT customer to increase an IoT device quantity of the IoT customer subsequently, the latter one (using the operating device quantity upper limit) can fully use data node resources of the operator and meet service requirements of the operator for "oversubscription" (a sum of contract device quantity upper limits of all customers is greater than a sum of device quantities that can be accommodated in the data node space of all the customers). A specific criterion to be used is not limited in this embodiment of this application, and may be determined by the operator by presetting a parameter.

Still in the foregoing example, if the contract device quantity upper limit is used as a determining criterion, the CBPMDB 1, the CBPMDB 2, the CBPMDB 3, and the CBPMDB 4 meet requirements of this step. If the operating device quantity upper limit is used as a determining criterion, all the five data nodes meet the requirements of this step.

Step 40307: The BMP determines whether a same-category customer quantity in the data node i is less than the same-category customer quantity threshold.

Specifically, the BMP determines whether the same-category customer quantity in the data node i (that is, a quantity of same-category customers that use the data node i as a home data node) is less than the same-category customer quantity threshold determined in the foregoing step. If yes, the BMP continues to perform step 40308; otherwise, the BMP performs step 40310 to continue to analyze a next data node.

This step is intended to select data nodes with comparatively fewer same-category customers. Still in the foregoing example, because the same-category customer quantity threshold calculated in the foregoing step is 2, only the CBPMDB 3 and the CBPMDB 4 meet requirements of this step.

Step 40308: The BMP puts the data node i into the first data node set.

The BMP puts the data node i into the first data node set, to further determine the home data node for the IoT customer in the set subsequently.

Step 40309: The BMP determines whether i is greater than or equal to the quantity of data nodes.

Specifically, the BMP determines whether i is greater than or equal to the quantity of data nodes. If yes, the BMP continues to perform step 40311; otherwise, the BMP performs step 40310 to continue to analyze a data node.

Step 40310: i = i + 1

The BMP increases a subscript of the data node by 1 to analyze the next data node.

Step 40311: The BMP determines the home data node for the IoT customer in the first data node set.

Specifically, the BMP may determine, in the first data node set, a data node (for example, the CBPMDB 3) with minimum remaining space, a data node with a minimum same-category customer quantity, or a data node with lightest load (for example, a data node whose CPU is idlest) as the home data node for the IoT customer.

In addition to performing the foregoing method procedure, the BMP may alternatively determine the home data node for the IoT customer in a procedure described in the following example.

Based on the operating device quantity upper limit of the IoT customer, the BMP selects, from the foregoing five CBPMDBs, data nodes whose remaining space can accommodate the data of all the devices of the IoT customer when the device quantity of the IoT customer reaches the operating device quantity upper limit, to form a first CBPMDB list. Still in the foregoing example, the CBPMDB 1, the CBPMDB 2, the CBPMDB 3, the CBPMDB 4, and the CBPMDB 5 all meet this requirement, and form the first CBPMDB list.

Based on this, it can be ensured that all the data nodes in the first CBPMDB list can accommodate the data of all the devices of the IoT customer until the device quantity of the IoT customer reaches the operating device quantity upper limit.

The BMP further selects the home data node for the IoT customer from the first CBPMDB list based on a same-category customer quantity in each data node. For example, the BMP may first calculate a same-category customer quantity threshold based on a total quantity of customers in all nodes and a quantity of the data nodes, and then select a node whose same-category customer quantity is less than the same-category customer quantity threshold, to form a second CBPMDB list. In the foregoing example, the BMP may divide the total quantity of customers in all the nodes by the quantity of the data nodes, to obtain an average quantity of customers, which is (3 + 2 + 1 + 1)/5 = 2; round the average quantity of customers to obtain a same-category customer quantity threshold, which is also 2; and further determine that data nodes with a customer quantity less than the same-category customer quantity threshold are the CBPMDB 3 and the CBPMDB 4, as shown in Table 7. That is, the second CBPMDB list includes the CBPMDB 3 and the CBPMDB 4.

**Table 7 Data node whose customer quantity is less than a same-category customer quantity threshold**

| Home data node | Quantity of same-category (category 3) customers | Customer quantity is less than a threshold. | Remaining space |
|---|---|---|---|
| CBPMDB 1 | 3 | No | Data volume of 4.1 million devices |
| CBPMDB 2 | 2 | No | Data volume of 2 million devices |
| CBPMDB 3 | 1 | Yes | Data volume of 3 million devices |
| CBPMDB 4 | 1 | Yes | Data volume of 3.5 million devices |
| CBPMDB 5 | 3 | No | Data volume of 0.95 million devices |

The BMP determines the home data node for the IoT customer in the first CBPMDB list, which is similar to step 40311.

Step 404: The BMP stores customer-related data in the home data node.

Specifically, the BMP stores the IoT customer-related data, including the customer information and device-related data of the IoT customer, in the home data node (which is the CBPMDB 4 in the foregoing example).

Step 405: The BMP updates the distribution customer information of customer quantities and statistical information of a device quantity in each data node to the SYSDB.

Specifically, the BMP may update the distribution information of customers and the statistical information of the device quantity in each data node based on customer information of the newly registered IOT customer, and save the updated information to the SYSDB.

Optionally, the BMP may further store, in the SYSDB, corresponding information of a home data node corresponding to each customer (including the newly registered IoT customer).

Step 406: The BMP returns a registration result to the CRM

The BMP returns a registration success to the CRM

By performing the foregoing steps, the BMP has allocated or selected the home data node for the IOT customer, and writes the information of the home data node corresponding to each customer into the SYSDB. Subsequently, when each device of the IOT customer sends a billing request to a CBPAdapter by using a GGSN, the CBPAdapter may obtain, from the SYSDB, the home data node for the IoT customer corresponding to the IoT device, and instruct the CBPAPP to access, from the home data node, data required for performing a billing service on the IoT device.

According to Embodiment 4 described above, the BMP can select the home data node CBPMDB for the IOT customer based on the customer information of the IOT customer and the customer information of the same-category customer of the IOT customer, and persistence of balance of volumes of stored data of the CBPMDBs can be improved. That is, as a quantity of different categories of IoT customers increases and services of each IoT customer develop (as a device quantity increases and more storage space is occupied), the volumes of the stored data of the plurality of CBPMDBs still tend to be balanced. In addition, according to Embodiment 4 described above, the BMP can further predict the operating device quantity upper limit of the IoT customer, and use the operating device quantity upper limit as a criterion for determining whether remaining space of the home data node is sufficient, so that an operator can further improve resource utilization of the home data node, for example, implement "oversubscription" .

### Embodiment 5

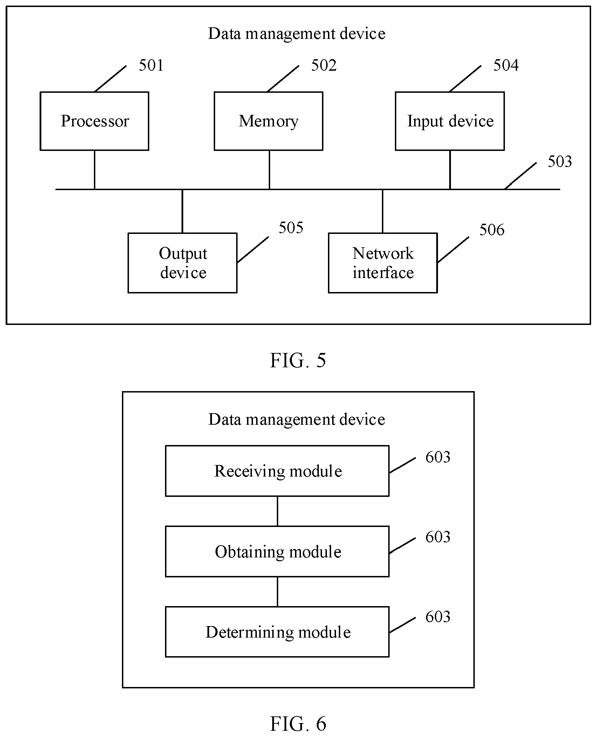

FIG. 5 is a structural diagram of hardware of a management device according to an embodiment of this application. The management device may be business management point 302 in FIG. 3, and may use hardware of a general-purpose computer shown in FIG. 5. The management device includes a processor 501, a memory 502, a bus 503, an input device 504, an output device 505, and a network interface 506.

Specifically, the memory 502 may include a computer storage medium in a form of a volatile and/or nonvolatile memory, such as a read-only memory and/or a random access memory. The memory 502 may store an operating system, an application program, another program module, executable code, and program data.

The input device 504 may be configured to input information, so that a system administrator can operate and manage the device, for example, configure a convergence coefficient. The input device 504 is, for example, a keyboard or a pointing device, such as a mouse, a trackball, a touchpad, a microphone, a joystick, a game pad, a satellite TV antenna, a scanner, or a similar device. The input device may be connected to the processor 501 by using the bus 503.

The output device 505 may be configured to output information, to facilitate operation and management performed by the system administrator on the device. In addition to a monitor, the output device 505 may alternatively be another peripheral output device, such as a speaker and/or a print device. These output devices may also be connected to the processor 501 by using the bus 503.

The management device may be connected to a network through the network interface 506, for example, connected to a local area network (Local Area Network, LAN). In a networking environment, a computer-executable instruction stored in the device may be stored in a remote storage device, and is not limited to being locally stored.

When executing the executable code or the application program stored in the memory 502, the processor 501 in the management device may perform the method steps corresponding to the management device in all the foregoing embodiments. For a specific execution process, refer to the foregoing embodiments. Details are not described herein again.

### Embodiment 6

FIG. 6 is a schematic structural diagram of a management device according to an embodiment of this application. The management device includes a receiving module 601, an obtaining module 602, and a determining module 603, and functions of the receiving module 601, whose functions are as follows:

The receiving module 601 is configured to receive a data node allocation request, where the data node allocation request includes customer information, the customer information includes a contract device quantity upper limit of a customer, and the contract device quantity upper limit is a maximum device quantity agreed upon by the customer in advance. For a specific execution process, refer to the descriptions of the steps on the management device side in Embodiment 1 to Embodiment 4, for example, steps 201 and 401.

Specifically, the management device may receive the data node allocation request from a CRM system, and the contract device quantity upper limit may be extracted from an account registration contract of the customer.

Optionally, the customer information may further include industry information and region information, to determine same-category customers.

The obtaining unit 602 is configured to obtain remaining space of each of the plurality of data nodes and customer information of all same-category customers in each of the plurality of data nodes, where customer information of each same-category customer and the customer information of the customer meet a same customer category criterion, and the customer category criterion includes at least a contract device quantity upper limit requirement. For a specific execution process, refer to the descriptions of the steps on the management device side in Embodiment 1 to Embodiment 4, for example, steps 202, 402, and 403.

The customer category criterion may include the contract device quantity upper limit requirement, or may include the industry requirement and/or the region requirement.

The determining module 603 is configured to determine a home data node for the customer in the plurality of data nodes based on the contract device quantity upper limit of the customer, the customer information of all the same-category customers in each of the plurality of data nodes, and the remaining space of each of the plurality of data nodes, where the home data node is configured to store data of all devices of the customer. For a specific execution process, refer to the descriptions of the steps on the management device side in Embodiment 1 to Embodiment 4, for example, steps 203 and 403.

Specifically, the determining module 603 may first select, from the plurality of data nodes, data nodes whose remaining space can accommodate the data all the devices of the customer when a device quantity reaches the contract device quantity upper limit or an operating device quantity upper limit, and in which a distributed same-category customer quantity is less than a same-category customer quantity threshold, to obtain a first candidate data node set; and then determine the home data node for the customer in the first candidate data node set. The determining module 603 determines the operating device quantity upper limit based on the contract device quantity upper limit of the customer, and the determining module 603 determines the same-category customer quantity threshold based on the customer information of all the same-category customers in each of the plurality of data nodes.

Specifically, that the determining module 603 determines the home data node for the customer in the first candidate data node set may be: determining, in the first candidate data node set, a data node with minimum remaining space, a data node with lightest load, or a data node with a minimum same-category customer quantity as the home data node for the customer.

Optionally, the determining module 603 may determine, based on a preset parameter, whether to select the data node with minimum remaining space, the data node with a minimum same-category customer quantity, or the data node with lightest load from the first candidate data node set.

Specifically, that the determining module 603 determines the same-category customer quantity threshold based on the customer information of all the same-category customers in each of the plurality of data nodes may be: first calculating a total quantity of all same-category customers included in the plurality of data nodes; and then determining the same-category customer quantity threshold based on the total quantity of same-category customers and a quantity of the plurality of data nodes.

Specifically, that the determining module 603 determines the same-category customer quantity threshold based on the total quantity of same-category customers and a quantity of the plurality of data nodes may be: first dividing the total quantity of same-category customers by the quantity of the plurality of data nodes, to obtain an average quantity of same-category customers; and then determining the same-category customer quantity threshold based on the average quantity of same-category customers.

Specifically, that the determining module 603 determines the same-category customer quantity threshold based on the average quantity of same-category customers may be: rounding the average quantity of same-category customers to obtain the same-category customer quantity threshold, or multiplying a preset coefficient by the average quantity of same-category customers to obtain the same-category customer quantity threshold.

Specifically, that the determining module 603 determines the operating device quantity upper limit of the customer based on the contract device quantity upper limit of the customer may be: first obtaining historical records of actual device quantities of all same-category customers in each of the plurality of data nodes; and then predicting the operating device quantity upper limit of the customer based on the contract device quantity upper limit of the customer and the historical records of the actual device quantities of the same-category customers.

Specifically, that the determining module 603 predicts the operating device quantity upper limit of the customer based on the contract device quantity upper limit of the customer and the historical records of the actual device quantities of the same-category customers may be: first obtaining a change trend of the actual device quantities of the same-category customers based on the historical records of the actual device quantities of the same-category customers; and then predicting the operating device quantity upper limit of the customer based on the contract device quantity upper limit of the customer and the change trend.

Specifically, that the determining module 603 predicts the operating device quantity upper limit of the customer based on the contract device quantity upper limit of the customer and the change trend may be: first predicting a stable device quantity of the same-category customer based on the change trend, where the stable device quantity is a device quantity that is of the same-category customer and whose variations between different time units in a preset time period are less than a preset value; and then predicting the operating device quantity upper limit of the customer based on the contract device quantity upper limit of the customer and the stable device quantity.

Specifically, that the determining module 603 predicts the operating device quantity upper limit of the customer based on the contract device quantity upper limit of the customer and the stable device quantity may be: dividing the stable device quantity by the contract device quantity upper limit of the same-category customer to obtain a first convergence coefficient; and then multiplying the first convergence coefficient by the contract device quantity upper limit of the customer to obtain the operating device quantity upper limit of the customer.

Specifically, that the determining module 603 determines the operating device quantity upper limit of the customer based on the contract device quantity upper limit of the customer may alternatively be: first obtaining a preset same-category customer device quantity upper limit; and then determining the operating device quantity upper limit of the customer based on the contract device quantity upper limit of the customer and the preset same-category customer device quantity upper limit.

Specifically, that the determining module 603 determines the operating device quantity upper limit of the customer based on the contract device quantity upper limit of the customer and the preset same-category customer device quantity upper limit may be: first dividing the preset same-category customer device quantity upper limit by the contract device quantity upper limit of the same-category customer to obtain a second convergence coefficient; and then multiplying the second convergence coefficient by the contract device quantity upper limit of the customer to obtain the operating device quantity upper limit of the customer.

Specifically, that the determining module 603 determines the operating device quantity upper limit of the customer based on the contract device quantity upper limit of the customer may alternatively be: first obtaining a third convergence coefficient preset for a customer category to which the customer belongs; and then determining the operating device quantity upper limit based on the third convergence coefficient and the contract device quantity upper limit of the customer.

Specifically, that the determining module 603 determines the operating device quantity upper limit based on the third convergence coefficient and the contract device quantity upper limit of the customer may be: multiplying the third convergence coefficient by the contract device quantity upper limit of the customer to obtain the operating device quantity upper limit of the customer.

In this embodiment, the management device is presented in a form of a functional module. The "module" herein may be an application-specific integrated circuit (application-specific integrated circuit, ASIC), a circuit, a processor and a memory that execute one or more software programs or firmware programs, an integrated logic circuit, and/or another component that can provide the foregoing function. In a simple embodiment, a person skilled in the art may figure out that the management device may also be in the form shown in FIG. 5. The receiving module 601, the obtaining module 602, and the determining module 603 may all be implemented by using the processor 501 and the memory 502 in FIG. 5. For example, a function of determining, by the determining module 603, the home data node for the customer may be implemented by the processor 501 by executing the code stored in the memory 502.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person of ordinary skill in the art that, for ease of brief description, for a detailed working process of the foregoing system, apparatuses and units, refer to a corresponding process in the foregoing method embodiments, and details are not described herein again.

In the several embodiments provided in this application, it should be understood that the disclosed system, apparatuses, and methods may be implemented in other manners. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located at one position, or may be distributed on a plurality of network units. Some or all of the units may be selected according to actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a removable hard disk, a read-only memory, a random access memory, a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A method for selecting a data node, applied to a management device, wherein the management device manages a plurality of data nodes, and the method comprises:
receiving a data node allocation request, wherein the data node allocation request comprises customer information, the customer information comprises a contract device quantity upper limit of a customer, and the contract device quantity upper limit is a maximum device quantity agreed upon by the customer in advance;
obtaining remaining space of each of the plurality of data nodes and customer information of all same-category customers in each of the plurality of data nodes, wherein customer information of each same-category customer and the customer information of the customer meet a same customer category criterion, and the customer category criterion comprises at least a contract device quantity upper limit requirement; and
determining a home data node for the customer in the plurality of data nodes based on the contract device quantity upper limit of the customer, the customer information of all the same-category customers in each of the plurality of data nodes, and the remaining space of each of the plurality of data nodes, wherein the home data node is configured to store data of all devices of the customer.

2. The method according to claim 1, wherein the determining, by the management device, a home data node for the customer in the plurality of data nodes based on the contract device quantity upper limit of the customer, the customer information of all the same-category customers in each of the plurality of data nodes, and the remaining space of each of the plurality of data nodes comprises:
selecting, from the plurality of data nodes, data nodes whose remaining space can accommodate the data of all the devices of the customer when a device quantity reaches the contract device quantity upper limit or an operating device quantity upper limit, and in which a distributed same-category customer quantity is less than a same-category customer quantity threshold, to obtain a first candidate data node set; and
determining the home data node for the customer in the first candidate data node set, wherein
the management device determines the operating device quantity upper limit based on the contract device quantity upper limit of the customer, and the management device determines the same-category customer quantity threshold based on the customer information of all the same-category customers in each of the plurality of data nodes.

3. The method according to claim 2, wherein the determining, by the management device, the home data node for the customer in the first candidate data node set comprises:
determining, in the first candidate data node set, a data node with minimum remaining space, a data node with lightest load, or a data node with a minimum same-category customer quantity as the home data node for the customer.

4. The method according to claim 2, wherein the determining, by the management device, the same-category customer quantity threshold based on the customer information of all the same-category customers in each of the plurality of data nodes comprises:
calculating a total quantity of all same-category customers comprised in the plurality of data nodes; and
determining the same-category customer quantity threshold based on the total quantity of same-category customers and a quantity of the plurality of data nodes.

5. The method according to claim 4, wherein the determining, by the management device, the same-category customer quantity threshold based on the total quantity of same-category customers and a quantity of the plurality of data nodes comprises:
dividing the total quantity of same-category customers by the quantity of the plurality of data nodes, to obtain an average quantity of same-category customers; and
determining the same-category customer quantity threshold based on the average quantity of same-category customers.

6. The method according to claim 5, wherein the determining, by the management device, the same-category customer quantity threshold based on the average quantity of same-category customers comprises:
rounding the average quantity of same-category customers to obtain the same-category customer quantity threshold, or multiplying a preset coefficient by the average quantity of same-category customers to obtain the same-category customer quantity threshold.

7. The method according to claim 2, wherein the determining, by the management device, the operating device quantity upper limit of the customer based on the contract device quantity upper limit of the customer comprises:
obtaining historical records of actual device quantities of all same-category customers in each of the plurality of data nodes; and
predicting the operating device quantity upper limit of the customer based on the contract device quantity upper limit of the customer and the historical records of the actual device quantities of the same-category customers.

8. The method according to claim 7, wherein the predicting, by the management device, the operating device quantity upper limit of the customer based on the contract device quantity upper limit of the customer and the historical records of the actual device quantities of the same-category customers comprises:
obtaining a change trend of the actual device quantities of the same-category customers based on the historical records of the actual device quantities of the same-category customers; and
predicting the operating device quantity upper limit of the customer based on the contract device quantity upper limit of the customer and the change trend.

9. The method according to claim 8, wherein the predicting, by the management device, the operating device quantity upper limit of the customer based on the contract device quantity upper limit of the customer and the change trend comprises:
predicting a stable device quantity of the same-category customer based on the change trend, wherein the stable device quantity is a device quantity that is of the same-category customer and whose variations between different time units in a preset time period are less than a preset value; and
predicting the operating device quantity upper limit of the customer based on the contract device quantity upper limit of the customer and the stable device quantity.

10. The method according to claim 9, wherein the predicting, by the management device, the operating device quantity upper limit of the customer based on the contract device quantity upper limit of the customer and the stable device quantity comprises:
dividing the stable device quantity by the contract device quantity upper limit of the same-category customer to obtain a first convergence coefficient; and
multiplying the first convergence coefficient by the contract device quantity upper limit of the customer to obtain the operating device quantity upper limit of the customer.

11. The method according to claim 2, wherein the determining, by the management device, the operating device quantity upper limit of the customer based on the contract device quantity upper limit of the customer comprises:
obtaining a preset same-category customer device quantity upper limit; and
determining the operating device quantity upper limit of the customer based on the contract device quantity upper limit of the customer and the preset same-category customer device quantity upper limit.

12. The method according to claim 11, wherein the determining, by the management device, the operating device quantity upper limit of the customer based on the contract device quantity upper limit of the customer and the preset same-category customer device quantity upper limit comprises:
dividing the preset same-category customer device quantity upper limit by the contract device quantity upper limit of the same-category customer to obtain a second convergence coefficient; and
multiplying the second convergence coefficient by the contract device quantity upper limit of the customer to obtain the operating device quantity upper limit of the customer.

13. The method according to claim 2, wherein the determining, by the management device, the operating device quantity upper limit of the customer based on the contract device quantity upper limit of the customer comprises:
obtaining a third convergence coefficient preset for a customer category to which the customer belongs; and
determining the operating device quantity upper limit based on the third convergence coefficient and the contract device quantity upper limit of the customer.

14. The method according to claim 13, wherein the determining, by the management device, the operating device quantity upper limit based on the third convergence coefficient and the contract device quantity upper limit of the customer comprises:
multiplying the third convergence coefficient by the contract device quantity upper limit of the customer to obtain the operating device quantity upper limit of the customer.

15. The method according to any one of claims 1 to 14, wherein the customer information further comprises industry information of the customer, and the customer category criterion further comprises an industry requirement.

16. The method according to any one of claims 1 to 14, wherein the customer information further comprises region information of the customer, and the customer category criterion further comprises a region requirement.

17. A management device, comprising a processor and a memory, wherein
the memory is configured to store a program instruction; and
the processor is configured to invoke and execute the program instruction stored in the memory, to enable the management device to perform the method for selecting a data node according to any one of claims 1 to 16.

18. A computer-readable storage medium, comprising an instruction, wherein when the instruction is run on a computer, the computer is enabled to perform the method for selecting a data node according to any one of claims 1 to 16.
